# FASCICULE DE BREVET EUROPEEN

(11) **EP 0 729 399 B1**
(45) Date de publication et mention de la délivrance du brevet: **13.05.1998**
(21) Numéro de dépôt: 95929930.6
(22) Date de dépôt: 06.09.1995
(51) Int. Cl.: B25J 18/02

(54) **SYSTEME TELESCOPIQUE**
TELESKOPISCHES SYSTEM
TELESCOPIC SYSTEM

(30) Priorité: 07.09.1994 FR 9410708
(43) Date de publication de la demande: 04.09.1996
(73) Titulaire: COMMISSARIAT A L'ENERGIE ATOMIQUE, 75015 Paris (FR)
(72) Inventeur: GARREC, Philippe, F-75017 Paris (FR)
(74) Mandataire: Ilgart, Jean-Christophe
(86) Numéro de dépôt international: FR9501150
(87) Numéro de publication internationale: WO9607513

(56) Documents cités:
- EP-A- 0 082 386
- US-A- 5 111 709

## Description

L'invention concerne un système télescopique.

On appelle ainsi des mécanismes composés de plusieurs modules qu'on peut à volonté déployer ou replier les uns dans les autres, ou éventuellement les uns à côté des autres pour régler leur longueur totale.

On les rencontre dans de nombreux domaines techniques tels que les grues, les échelles ou les appendices de robots pour atteindre un but à distance variable ou pour d'autres fonctions, spécifiques à chaque appareil dans lequel ils sont incorporés. Dans le cas de robots marchant sur une série de jambes réparties en deux jeux qui, alternativement, touchent le sol pour soutenir le robot puis sont soulevées et avancées, des mécanismes télescopiques équipant les jambes pour les raccourcir et les allonger permettent d'accomplir ce procédé de façon simple, car il suffit de faire glisser les jambes le long du robot pour les avancer une fois qu'elles sont soulevées du sol. Les jambes peuvent rester droites, et il est inutile de les diviser en tronçons articulés entre eux et au robot pour essayer de reproduire la marche humaine, qui exige une structure plus complexe et pose des problèmes d'équilibre.

On fera une première distinction en ne s'intéressant qu'aux mécanismes pour lesquels la course de déploiement est plus grande que la longueur du mécanisme à l'état replié, ce qui impose d'utiliser au moins deux modules comprenant un élément d'allongement déployable (tel qu'un tube coulissant) et un mécanisme qui unit cet élément d'allongement à un élément d'allongement précédent ou à un élément fixe servant de base au mécanisme pour faire varier la distance qui les sépare et commander ainsi le déploiement de l'élément d'allongement. Le système est alors compliqué par la nécessité d'ajouter des liaisons mécaniques pour unir les mécanismes afin de commander à la fois ou successivement le déploiement de tous les éléments d'allongement.

Un système télescopique courant, utilisé pour certaines grues hydrauliques, consiste en plusieurs tubes concentriques reliés entre eux par des vérins disposés en série et communiquant entre eux par des conduits de fluide de façon qu'une source de pression unique puisse les déployer successivement. La commande est alors assurée par une seule action. Un vérin unique à effet multiple, c'est-à-dire composé de plusieurs cylindres emboîtés et coulissants, peut aussi être employé avec le même avantage. Mais les vérins sont des dispositifs assez pesants et encombrants, qui nécessitent de plus des câbles souples d'alimentation et des capteurs qui compliquent leur installation. Cette solution ne doit donc pas être retenue dans des applications telles que la robotique, où on désire réduire autant que possible le poids total du système et l'encombrement des moyens de commande et de contrôle.

Un système tout différent consiste à pourvoir les éléments de déploiement de poulies et de câbles qui les relient entre eux en formant des zigzags. Il suffit de tirer sur une extrémité de câble pour lever simultanément les éléments. Ce système, employé pour certaines échelles et certains élévateurs, est caractérisé par un défaut de rigidité qui peut être précieux pour des pompiers ou des déménageurs qui doivent accoster l'échelle à un bâtiment, mais inadmissible dans d'autres applications, et présente les inconvénients d'une faible capacité de charge ainsi qu'une tenue problématique des câbles et poulies dans le temps.

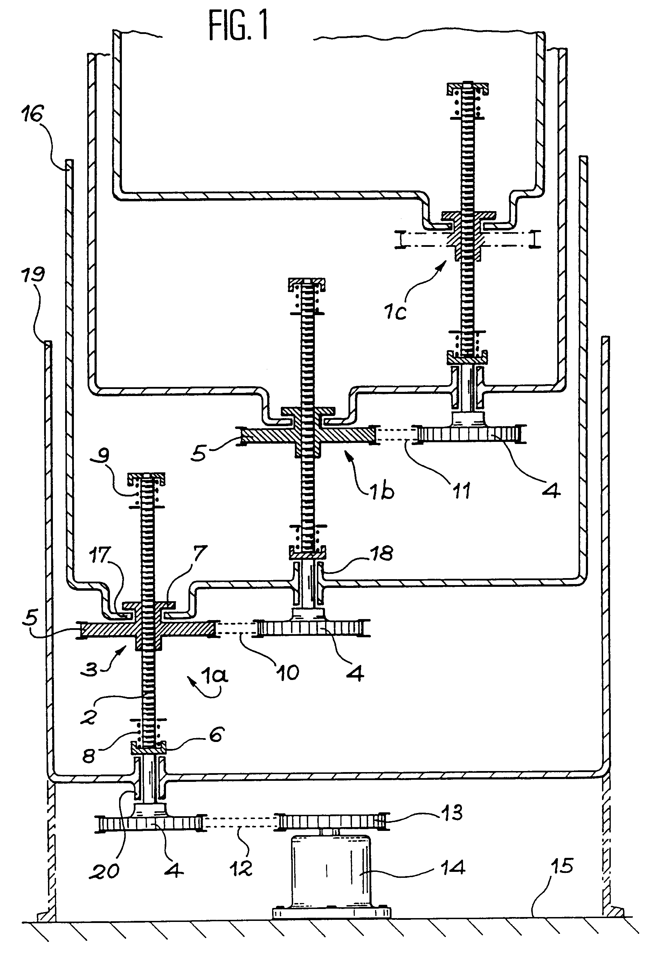

Un système plus compliqué, bien qu'assez simple à construire, de poids assez faible et de bonne rigidité, est décrit à l'aide de la figure 1. Il a été utilisé dans un robot et se compose de trois modules de déploiement 1a, 1b et 1c dont chacun comprend une vis 2, un écrou 3 en prise avec la vis 2, une poulie d'entrée 4 fixée à une extrémité arrière de la vis 2, une poulie de sortie 5, fixée autour de l'écrou 3 et coaxiale à lui, une portée d'appui de vis 6 vers l'arrière de la vis 2 mais en avant de la poulie 4, une portée d'appui d'écrou 7, une butée arrière 8 située sur la vis 2 juste en avant de la portée d'appui de vis 6 et une butée avant 9 située tout à l'avant de la vis 2 ; les éléments essentiels de ces butées 8 et 9 sont des ressorts coaxiaux à la vis 2.

La poulie d'entrée 4 du module intermédiaire 1b est reliée par une courroie 10 à la poulie de sortie 5 du premier module 1a, et la poulie de sortie 5 du module 1b est reliée par une autre courroie 11 à la poulie avant 4 du troisième module 1c. Enfin, une troisième courroie 12 relie la poulie 4 du premier module 1a à une poulie motrice 13 d'un moteur 14 fixé à un bâti 15.

Les modules 1 comprennent encore chacun un tube 16 muni d'un palier 17 pour la portée d'appui d'écrou 7 de ce module et d'un palier 18 pour la portée d'appui de vis 6 du module suivant, à l'exception bien entendu du tube 16 du troisième module 1c qui est le dernier du système et est donc dépourvu du palier 18. Les tubes 16 sont concentriques, coulissent les uns dans les autres et dans un tube externe 19 qui s'élève du bâti 15 dont il est solidaire et porte un palier 20 pour la portée d'appui de vis 6 du premier module 1a. Des dispositifs mécaniques élémentaires et qui ne sont pas représentés, tels que des glissières, des cannelures ou des emboîtements de sections polygonales, unissent les tubes 16 et 19 entre eux et les empêchent de tourner librement tout en leur permettant de coulisser.

La mise en marche du moteur 14 fait tourner la vis 2 du premier module 1a, et l'écrou 3 est censé rester immobile en rotation et se déplacer en translation, entraînant le tube 16 du premier module 1a et les autres modules 1b et 1c, jusqu'à ce qu'ils atteignent une des butées 8 et 9 selon le sens de rotation du moteur 14. L'écrou 3 est alors bloqué et devient solidaire de la vis 2, et transmet sa rotation à la vis 2 du dernier module 1b par la courroie 10, ce qui déplace l'écrou 3 et le tube 16 de ce module 1b, et ainsi de suite jusqu'à ce que les mécanismes de tous les modules 11 soient bloqués. Cependant, l'expérience prouve que le système n'est pas déterminé parfaitement au sens de la cinématique, car si des frottements plus importants que prévu surgissent entre une vis et un écrou, l'écrou est solidaire de la vis dès le départ et le mouvement concerne d'abord les modules suivants, avant éventuellement qu'un blocage complet de ces derniers n'impose une reprise de la translation de cet écrou en vainquant le frottement. Un autre inconvénient, peut-être plus grave, est la présence des butées 8 et 9 qui doivent être munies de ressorts pour éviter les chocs des écrous 3. Le déploiement total est connu, mais les butées provoquent des variations dynamiques des frottements et de l'inertie, sources de perturbations pour un système asservi. On peut souhaiter un comportement plus régulier et prévisible du système.

L'objectif de l'invention est de perfectionner ce dernier système en assurant un déploiement régulier des modules et éventuellement, dans une réalisation, une concentricité à peu près parfaite des mécanismes pour obtenir un meilleur équilibre statique du système et un faible encombrement total.

L'invention concerne donc un système télescopique composé de plusieurs modules comprenant chacun un boîtier, un écrou tournant librement dans le boîtier et retenu en translation dans le boîtier, et une vis engagée dans l'écrou, les boîtiers étant mutuellement librement coulissants et retenus en rotation, les modules étant disposés en chaîne, caractérisé en ce que des modules voisins dans la chaîne sont reliés entre eux par un accouplement de transmission de rotation entre l'une des parties tournantes, vis et écrou, de chacun d'eux et que chacun des modules comprend une liaison de transmission de rotation entre sa vis et son écrou.

On va maintenant décrire l'invention plus en détail à l'aide des figures suivantes, annexées à titre non limitatif :
- la figure 1 déjà décrite illustre un système de l'art antérieur,
- la figure 2 illustre une première réalisation de l'invention,
- la figure 3 illustre une variante de réalisation,
- la figure 4 illustre un module d'une seconde réalisation de l'invention,
- et la figure 5 illustre complètement une seconde réalisation de l'invention.

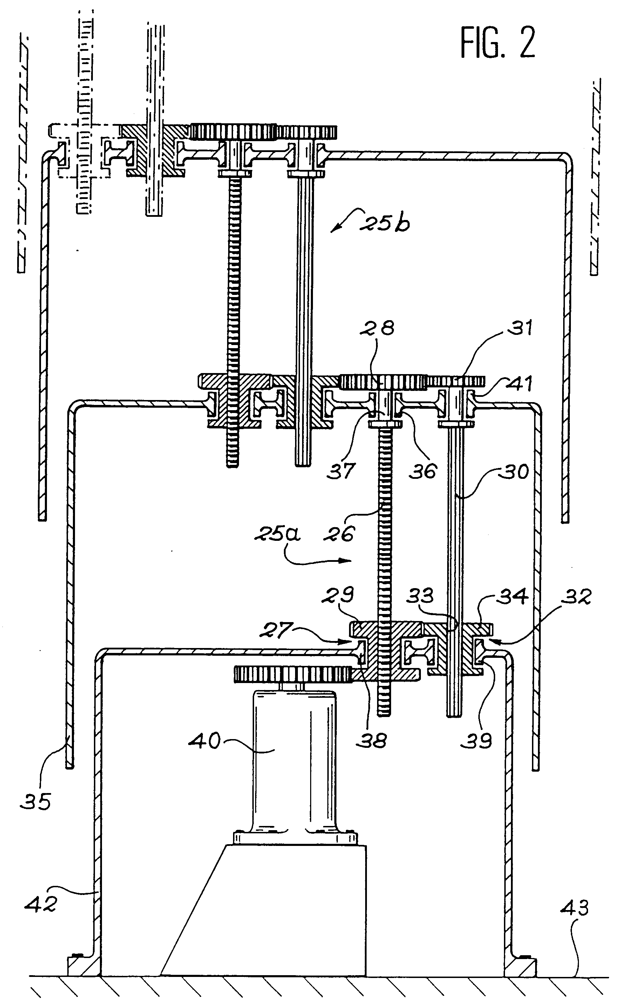

Le dispositif de la figure 2 comprend au moins deux modules de déploiement 25a et 25b, qui peuvent être prolongés par d'autres et en nombre total quelconque, comme pour la réalisation suivante. Ces modules comprennent une vis 26, un écrou 27 en prise sur la vis 26, une roue dentée de vis 28 à l'avant de la vis 26, une roue dentée d'écrou 29 sur l'écrou 27, un axe de transmission 30 parallèle à la vis 26, une roue dentée d'axe 31 à l'avant de l'axe de transmission 30 et engrenant avec la roue dentée de vis 28, une douille 32 dans laquelle l'axe de transmission 30 coulisse tout en y étant retenu en rotation par des cannelures 33, et une roue dentée de douille 34 engrenant avec la roue dentée d'écrou 29.

Chaque module comprend encore un tube 35 muni d'un palier 36 dans lequel repose une portée d'appui 37 de la vis 26, entre la partie filetée de la vis 26 et la roue dentée de vis 28, et d'un palier 41 qui soutient une portée de l'axe de transmission 30 juste à l'arrière de la roue dentée d'axe 31. Quant à l'écrou 27 et à la douille 32, ils sont soutenus dans des paliers 38 et 39 du tube 35 du module 25 précédent, ou, pour le premier module 25a, d'un tube de base 42 coaxial au tube 35 et fixé à un bâti 37 du système.

Il importe de noter que, sauf pour le dernier module, la roue dentée de vis 28 engrène avec la roue dentée de douille 34 du module 25 suivant. Dans ces conditions, quand un moteur 40 fixé au bâti 43 entraîne l'écrou 27 du premier module 25a, le mouvement est transmis par les roues dentées d'écrou 29, de douille 34, d'axe 31 et de vis 28 à la vis 26 de ce module 25a, ainsi qu'à la roue dentée de douille 34 du module 25b suivant, puis à l'écrou 27 de ce module 25b par la roue dentée d'écrou 29, à la vis 26 de ce module 25b par les roues dentées d'écrou 31 et de vis 28, et encore aux vis 26 et aux écrous 27 des modules suivants 25c, etc. Comme les rotations des écrous 27 et des vis 26 sont toutes imposées par les rapports de denture des engrenages, les translations des vis 26 et donc des tubes 35 le sont également ; aucun choc dû à une butée n'apparaît ; et comme les mouvements sont simultanés et qu'aucune temporisation n'existe si on néglige les jeux mécaniques, le déploiement est simultané pour tous les tubes 35. Ces résultats sont obtenus en conservant l'avantage de ne recourir qu'à un seul moteur 40, ou plus généralement un seul actionneur de commande. Il est possible d'évaluer parfaitement l'inertie des pièces des mécanismes, et leurs frottements avec une bonne précision, à tout instant du déploiement ou du repli, et donc de choisir des moyens de contrôle dynamique qui tiennent compte de ces facteurs et permettent une bonne précision de commande. Enfin, le système peut être rendu facilement réversible si les angles des vis 26 et les rendements des transmissions sont suffisants. On peut choisir pour cela des vis à billes avec de grands angles d'hélice, de l'ordre de 45°. Un système réversible permet un arrêt automatique du déploiement, même si le moteur est toujours en marche, par la limitation de l'effort moteur à une valeur bien déterminée de résistance rencontrée. Les nombreuses roues dentées offrent de grandes possibilités de réglage de la raison des mécanismes, c'est-à-dire du rapport de la translation de la vis sur la rotation de l'écrou.

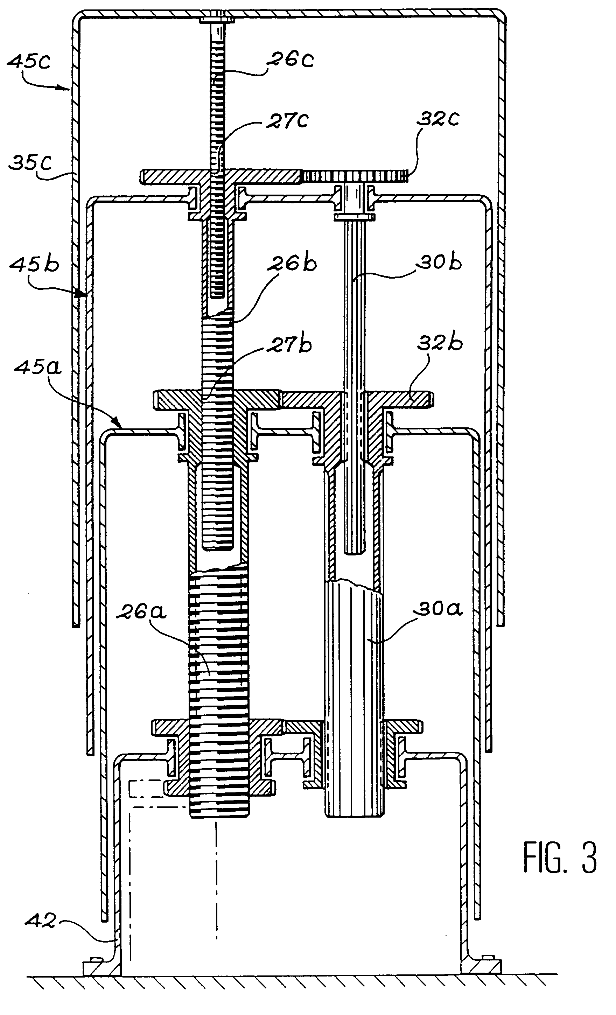

Cette première réalisation de l'invention présente par rapport au mécanisme précédent l'inconvénient d'un alourdissement produit par les axes de transmission 30, et elle n'améliore pas la concentricité des mécanismes des différents modules 25. Or la variante de réalisation de la figure 3 est exempte de ces défauts, car les mécanismes de ses modules sont tous concentriques, et de plus simples et légers. On a illustré ici encore un système à trois modules 45a, 45b et 45c de déploiement, bien que le troisième module 45c soit un module incomplet à l'extrémité du système et se limite à un tube 35c auquel est fixée une vis 26c. Il n'y a en réalité aucune limite théorique du nombre de modules.

Les vis, référencées par 26a, 26b et 26c dans cette réalisation, sont creuses et pénètrent les unes dans les autres en s'amenuisant vers l'extrémité, à l'exception de la vis 26c qui peut être pleine.

Les écrous 27b et 27c sont ici solidaires de la vis 26a ou 26b du module précédent, et bien entendu coaxiaux à cette vis, et de plus les douilles 32b et 32c sont solidaires de l'axe de transmission 30a ou 30b du module précédent, avec pour conséquence que les axes de transmission 30a et 30b des modules qui en comportent, à savoir les deux premiers 35a et 35b, sont concentriques et coulissent l'un dans l'autre. Cette réalisation fonctionne à peu près comme la précédente, grâce aux rotations du moteur qui sont transmises à la fois à toutes les vis et à tous les écrous, et avec des angles différents entre les vis et les écrous pour produire un vissage et une translation de modules. Son seul défaut, dû au plus petit nombre de roues dentées, est que les rapports de transmission sont moins faciles à choisir librement.

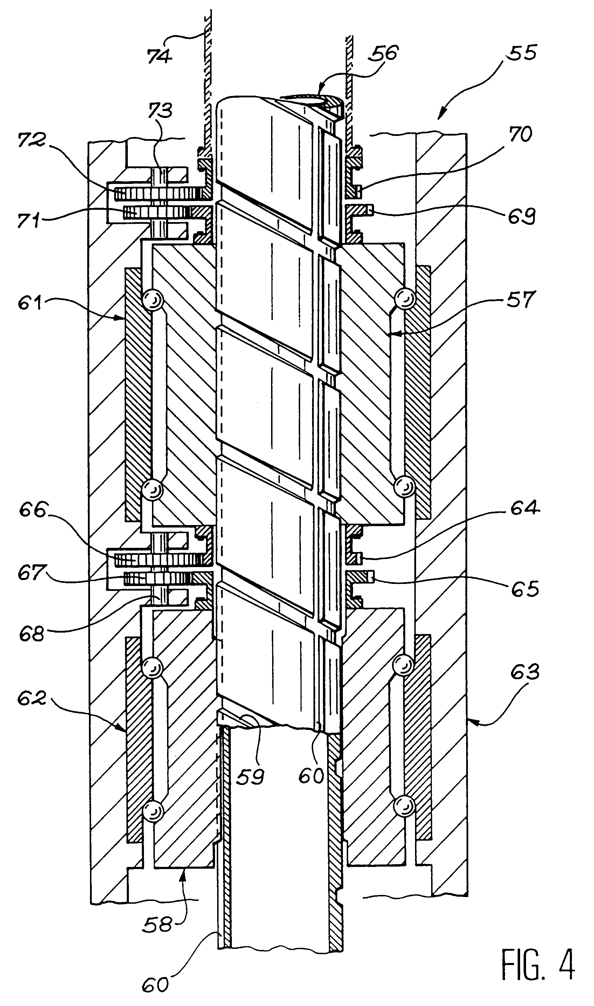

Une réalisation d'un genre différent sera décrite à l'aide de la figure 4. Un module 55 de déploiement du système télescopique comprend encore une vis 56, un écrou 57 et une douille 58, ceux-ci étant en prise sur celle-là par des filets 59 et des cannelures 60 de la vis 56. La vis 56 est donc une vis cannelée qui entraîne la douille 58 en rotation mais qui est libre par rapport à elle en translation. Des roulements à billes 61 et 62 permettent à l'écrou 57 et à la douille 58 de tourner librement dans un tube 63 coaxial à eux et à la vis 56. Enfin, on trouve une roue dentée d'écrou 64, une roue dentée de douille 65 et deux pignons 66 et 67, en prise respectivement avec ces deux roues dentées 64 et 65, et qu'un axe de liaison 68 engagé dans un perçage du tube 63 unit. Comme l'axe de liaison 68 pivote librement dans le perçage et que les pignons 66 et 67 lui sont solidaires, l'ensemble forme un train d'engrenage réducteur. La vis 56 traverse les roues dentées 64 et 65, qui sont évidées au centre, sans les toucher.

Une rotation de l'écrou 57 entraîne une rotation différente de la douille 58 et de la vis 56, et donc une translation par vissage de cette dernière. La rotation peut être imposée à l'écrou 57 par une autre vis cannelée entourant l'autre 56 et solidaire de l'écrou 57 à l'opposé du train d'engrenage ou, comme on le représente, par l'intermédiaire d'un autre train d'engrenage identique ou analogue au précédent et comprenant une seconde roue dentée d'écrou 69, une roue dentée de vis 70, et deux pignons 71 et 72, tournant ensemble avec un axe 73 de liaison engagé dans un perçage du tube 63 et en prise respectivement avec les roues dentées 69 et 70 ; la vis cannelée du module précédent, référencé par 74, est solidaire de la roue dentée de vis 70. D'autres conceptions compatibles avec ce principe de fonctionnement sont possibles. On peut aussi supprimer le roulement à billes 62 pour que la douille 58 soit solidaire du tube 63, avec la conséquence est que la vis 56 de ce module est bloquée en rotation. Cette construction peut être retenue pour l'extrémité du système. On peut aussi souder la vis à l'extrémité d'un tube fermé à l'extrémité pour obtenir le même effet. La douille 58 est alors omise.

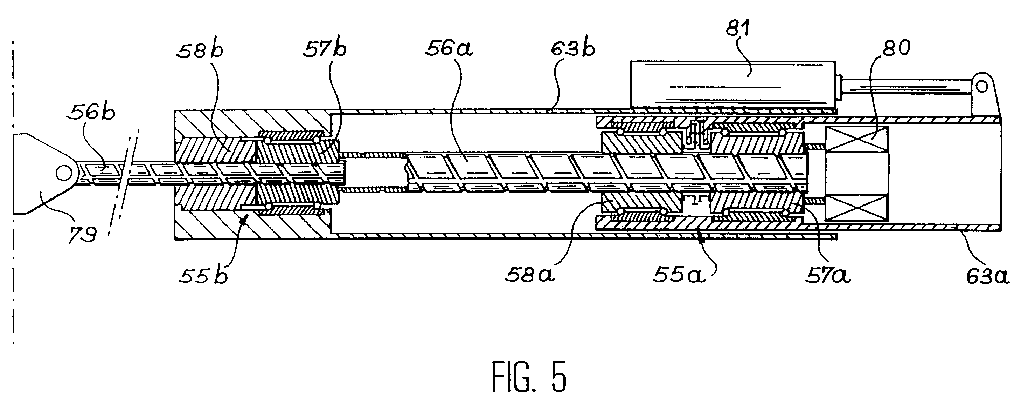

La figure 5 illustre complètement un système télescopique incorporant le module de la figure 4. On reconnaît deux modules 55a et 55b, dont la vis 56a du premier est rigidement unie à l'écrou 57b du second. La vis 56b du second module 55b, qui constitue l'extrémité du système, est terminée par un patin articulé 79 qui peut servir d'élément de support : le système est alors une béquille extensible de robot marcheur. L'écrou 57a du premier module 55a est mû par un moteur 80 engagé dans le tube 63a. Il s'agit d'un moteur en anneau dont l'évidement laisse passer la vis 56a. De l'espace, qu'on peut occuper par d'autres moteurs, des capteurs ou d'autres appareils, subsiste derrière le moteur 80 dans le tube 63a. Un vérin 81 peut unir les tubes 63a et 63b : il constitue alors le mécanisme qui règle leur position, à la place des moteurs décrits auparavant ; le moteur 80 est alors omis. Un tel vérin, d'orientation parallèle à la direction de déploiement, peut être utilisé quand les systèmes vis-écrou sont réversibles, quelle que soit par ailleurs la réalisation choisie.

Ces systèmes peuvent être commandés indifféremment par un écrou, ce qu'on a proposé jusqu'ici, ou par une vis. C'est alors normalement la vis d'extrémité qui est entraînée, par un moteur placé à son bout.

## Revendications

1. Système télescopique composé de plusieurs modules (25; 55) comprenant chacun un boîtier (35; 63), un écrou (27; 57) tournant librement dans le boîtier et retenu en translation dans le boitier (35; 63), et une vis (26; 56) engagée dans l'écrou (27; 57), les boîtiers étant mutuellement librement coulissants et retenus en rotation, les modules étant disposés en chaîne, caractérisé en ce que des modules voisins dans la chaîne sont reliés entre eux par un accouplement de transmission de rotation (28, 34, 29; 69 à 73) entre l'une des parties tournantes, vis ou écrou, de chacun d'eux et que chacun des modules comprend une liaison de transmission de rotation (32, 33, 30, 31, 28; 64 à 68) entre sa vis et son écrou.

2. Système télescopique selon la revendication 1, caractérisé en ce que l'accouplement de transmission de rotation entre la vis et l'écrou de modules voisins est un engrenage (28, 34, 29), la vis tournant librement dans le même boîtier (35) que l'écrou.

3. Système télescopique selon la revendication 2, caractérisé en ce que la liaison de transmission de rotation comprend une roue dentée intermédiaire (34) de l'engrenage, un axe (30) parallèle à la vis (26) et un engrenage comprenant une roue dentée (34) coulissant sur l'axe et une roue dentée (29) solidaire de l'écrou (27) en prise avec la vis (26), la roue dentée coulissant sur l'axe étant retenue en translation dans le boîtier (35) dudit écrou et tournant librement dans ledit boîtier.

4. Système télescopique selon la revendication 1, caractérisé en ce que la liaison de transmission de rotation comprend une douille (58) liée à la vis (56) par des cannelures (60).

5. Système télescopique selon la revendication 5, caractérisé en ce que la douille est retenue en translation dans le boîtier de l'écrou en prise avec la vis et tourne librement dans ledit boîtier (63).

6. Système télescopique selon la revendication 4, caractérisé en ce que la liaison de transmission de rotation comprend un engrenage dont au moins une roue dentée (66, 67) tourne autour d'un axe (68) monté dans le tube (63).

7. Système télescopique selon la revendication 1, caractérisé en ce que les vis (26a, 56, 74) sont concentriques et pénètrent les unes dans les autres.

8. Système télescopique selon ma revendication 4, caractérisé en ce que les accouplements sont des accouplements rigides.

## Claims

1. Telescopic system formed from several modules (25, 55) each comprising a case (35, 63), a nut (27, 57) rotating freely in the case and retained in translation in said case (35, 63), and a screw (26, 56) engaged in the nut (27, 57), the cases being mutually freely sliding and retained in rotation, the modules being arranged in chain, characterized in that adjacent modules in the chain are interconnected by a rotation transmission coupling (28, 34, 29; 69 to 73) between one of the rotary parts, screw and nut, of each of them and that each of the modules comprises a rotation transmission link (32, 33, 30, 21, 28; 64 to 68) between its screw and its nut.

2. Telescopic system according to claim 1, characterized in that the rotation transmission coupling between the screw and nut of adjacent modules is a gear (28, 34, 29), the screw rotating freely in the same case (35) as the nut.

3. Telescopic system according to claim 2, characterized in that the rotation transmission link comprises an intermediate toothed wheel (34) of the gear, a shaft (30) parallel to the screw (26) and a gear incorporating a toothed wheel (34) sliding on the shaft and a toothed wheel (29) integral with the nut (27) engaged with the screw (26), the toothed wheel sliding on the shaft being retained in translation in the case (35) of said nut and rotating freely in said case.

4. Telescopic system according to claim 1, characterized in that the rotation transmission link comprises a bushing (58) linked with the screw (56) by grooves (60).

5. Telescopic system according to claim 5, characterized in that the bushing is retained in translation in the case of the nut engaged with the screw and rotates freely in said case (63).

6. Telescopic system according to claim 4, characterized in that the rotation transmission link comprises a gear, whereof at least one toothed wheel (66, 67) rotates about a shaft (68) mounted in the tube (63).

7. Telescopic system according to claim 1, characterized in that the screws (26a, 56, 74) are concentric and penetrate one another.

8. Telescopic system according to claim 4, characterized in that the couplings are rigid couplings.

## Patentansprüche

1. Teleskopisches System, gebildet durch mehrere Module (25; 55), jeder ein Gehäuse (35; 63), eine in dem Gehäuse frei drehbare und gegen Translation in dem Gehäuse (35; 63) festgehaltene Mutter (27; 57) und eine in die Mutter (27; 57) geschraubte Spindel (26; 56) umfassend, wobei die Gehäuse gegenseitig frei ineinander gleiten und gegen Drehung festgehalten werden und dabei die Module kettenförmig angeordnet sind,
**dadurch gekennzeichnet,**
daß in der Kette benachbarte Module miteinander verbunden sind durch eine Rotationsübertragungskupplung (28, 34, 29; 69 bis 73) zwischen einem der drehbaren Teile, Spindel oder Mutter von jedem von ihnen, und daß jeder Modul eine Rotationsübertragungsverbindung (32, 33, 30, 31, 28; 64 bis 68) zwischen seiner Spindel und seiner Mutter aufweist.

2. Teleskopisches System nach Anspruch 1, dadurch gekennzeichnet, daß die Drehübertragungskupplung zwischen der Spindel und der Mutter benachbarter Module eine Getriebe ist (28, 34, 29), wobei die Spindel in demselben Gehäuse (35) wie die Mutter frei drehbar ist.

3. Teleskopisches System nach Anspruch 2, dadurch gekennzeichnet, daß die Rotationsübertragungsverbindung ein Zwischenzahnrad (34) des Getriebes, eine zu der Spindel (26) parallele Achse (30) und ein Getriebe umfaßt, das ein auf der Achse gleitendes Zahnrad (34) und ein Zahnrad (29) enthält, das mit der Mutter (27), in die die Spindel (26) geschraubt ist, fest verbunden bzw. aus einem Stück ist, wobei das auf der Achse gleitende Zahnrad in dem Gehäuse (35) der genannten Mutter gegen Translation festgehalten wird und in besagtem Gehäuse frei drehbar ist.

4. Teleskopisches System nach Anspruch 1, dadurch gekennzeichnet, daß die Rotationsübertragungsverbindung eine mit der Spindel (56) durch Rillen (60) verbundene Hülse (58) umfaßt.

5. Teleskopisches System nach Anspruch 4, dadurch gekennzeichnet, daß die Hülse in dem Gehäuse der Mutter, in die die Spindel geschraubt ist, gegen Translation festgehalten wird und in dem Gehäuse (63) frei dreht.

6. Teleskopisches System nach Anspruch 4, dadurch gekennzeichnet, daß die Rotationsübertragungsverbindung ein Getriebe umfaßt, von dem wenigstens ein Zahnrad (66, 67) sich um eine in dem Rohr (63) angebrachte Achse (68) dreht.

7. Teleskopisches System nach Anspruch 1, dadurch gekennzeichnet, daß die Spindeln (26a, 56, 74) konzentrisch sind und ineinander eindringen.

8. Teleskopisches System nach Anspruch 4, dadurch gekennzeichnet, daß die Kupplungen starre Kupplungen sind.
